# FASCICULE DE BREVET EUROPEEN

(11) **EP 3 471 556 B1**
(45) Date de publication et mention de la délivrance du brevet: **06.11.2024**
(21) Numéro de dépôt: 17731875.5
(22) Date de dépôt: 20.06.2017
(51) Int. Cl.: A23L 3/3409, A23B 7/144, B65D 81/28

(54) **PROCÉDÉ DE TRAITEMENT PAR UN PRODUIT BIOCIDE OU PHYTOPROTECTEUR, DISPOSITIF ET ENSEMBLE DE TRAITEMENT CORRESPONDANT**
BEHANDLUNGSVERFAHREN DURCH EIN BIOZIDES- ODER PFLANZENSCHUTZMITTEL, ENTSPRECHENDE BEHANDLUNGSVORRICHTUNG UND -ANORDUNG
TREATMENT PROCESS WITH BIOCIDAL OR PHYTOPROTECTING PRODUCT, CORRESPONDING TREATMENT DEVICE AND SET

(30) Priorité: 20.06.2016 FR 1655731
(43) Date de publication de la demande: 24.04.2019
(73) Titulaire: Xeda International S.A., 13670 Saint Andiol (FR)
(72) Inventeur: SARDO, Alberto, 13160 Chateaunard (FR); SARDO, Stefano, 13160 Chateaunard (FR)
(74) Mandataire: Lavoix
(86) Numéro de dépôt international: PCT/EP2017/065138
(87) Numéro de publication internationale: WO 2017/220612

(56) Documents cités:
- WO-A1-2014/001201
- WO-A1-2014/160274
- WO-A1-93/02563
- US-A- 5 918 537
- US-B1- 6 375 999
- US-B2- 9 950 087

## Description

L'invention concerne en général la vaporisation de produits biocides et ou phytoprotecteu rs.

Plus précisément, l'invention concerne selon un premier aspect un procédé de traitement par au moins un produit biocide et ou phytoprotecteur.

Il est connu que certains produits volatiles d'origine naturelle, par exemple les huiles essentielles, ont des propriétés biocides ou phytosanitaires intéressantes. Ils sont notamment utilisés pour traiter des produits végétaux, de manière à améliorer leur conservation.

Les techniques utilisées jusqu'à présent pour appliquer ces produits sur des végétaux sont les suivantes :
- immersion des produits végétaux dans une dispersion aqueuse chaude ou froide contenant le produit ;
- aspersion de locaux, par exemple des chambres de stockage pour végétaux, afin de les assainir ;
- micro-nébulisation à l'entrée des produits végétaux dans les chambres de stockage.

US6375999B1 divulgue un procédé de traitement de pommes de terre par du DMN et du CIPC.

WO2014/001201A1 porte sur un procédé de traitement dans lequel un produit, biocide et/ou phytoprotecteur volatile est évaporé à froid en utilisant des bandes absorbantes.

WO93/02563 un procédé de traitement de pommes de terre un produit, biocide et/ou phytoprotecteur volatile est évaporé à froid en utilisant des mèches trempant dans un récipient.

Les quantités de produits appliquées sont élevées et peuvent conduire à des concentrations importantes dans les produits végétaux.

Dans ce contexte, l'invention vise à proposer un procédé de traitement qui ne présente pas ce défaut.

A cette fin, l'invention porte sur un procédé de traitement selon la revendication 1.

L'idée à la base de l'invention est donc de réaliser un traitement qui s'étale sur une longue durée, par opposition aux traitements connus dans lesquels une quantité importante de produits est injectée ponctuellement, sur une très courte période. Ceci permet d'injecter le produit par petites quantités, progressivement, de telle sorte que la concentration de produits à l'intérieur de l'enceinte fermée reste constamment à un niveau modéré.

De plus, le système s'autorégule, le produit étant vaporisé à température ambiante, inférieure à 50°C, il s'évapore jusqu'à atteindre la saturation de l'atmosphère sans risque de sursaturation (ce qui est le cas quand on chauffe). Cela permet d'éviter que le liquide recondense après injection. La condensation du liquide conduit à la formation de gouttes qui peuvent retomber sur les produits alimentaires stockés, et être phytotoxiques pour ceux-ci. Au contraire, l'évaporation à froid permet une excellente diffusion et une excellente pénétration dans la masse des produits végétaux stockés à l'intérieur de l'enceinte fermée, du fait de l'absence de condensation sous forme de gouttelettes. Ceci conduit à des concentrations de produits sur les produits végétaux ou sur les parois internes de l'enceinte fermée relativement constantes et modérées.

De plus, les molécules de vapeur se diffusent plus facilement que les gouttelettes de liquides, notamment dans des produits végétaux stockés en vrac ou dans des containers de gros volumes tel que des palox ou Big-Bags.

Le procédé de traitement peut en outre présenter une ou plusieurs des caractéristiques énoncées dans les revendications dépendantes 2 à 6.

En variante, le procédé comporte une étape de détermination d'une grandeur représentative de la vitesse d'absorption du ou de chaque produit par les produits végétaux, et une étape de sélection des conditions d'injection du liquide en fonction de la grandeur représentative déterminée.

Selon un second aspect, l'invention porte sur un dispositif de traitement selon la revendication 7.

Le dispositif peut en outre représenter une ou plusieurs des caractéristiques énoncées dans les revendications dépendantes 8 à 10.

Selon un troisième aspect, l'invention porte sur un ensemble comprenant une enceinte fermée et un dispositif de traitement ayant les caractéristiques ci-dessus, le vaporiseur étant configuré pour injecter le liquide vaporisé dans l'enceinte fermée, des produits végétaux étant de préférence stockés dans l'enceinte fermée.

D'autres caractéristiques et avantages de l'invention ressortiront de la description détaillée qui en est donnée ci-dessous, à titre indicatif et nullement limitatif, en référence aux figures annexées, parmi lesquelles :
- les figures 1 à 5 sont des diagrammes de temps illustrant différents modes de réalisation, seul le mode de réalisation de la figure 5 étant selon l'invention ;
- la figure 6 est une illustration schématique simplifiée d'un ensemble comportant un local à assainir et un dispositif de traitement conforme à l'invention ;
- la figure 7 est une vue similaire à celle de la figure 6, dans lequel le dispositif de traitement de l'invention est monté dans une chambre de stockage de produits végétaux ;
- la figure 8 est une vue schématique d'un ensemble non conforme à l'invention, dans lequel l'enceinte fermée est un emballage dans lequel des produits végétaux sont conditionnés ;
- les figures 9 et 10 sont des graphiques permettant de déterminer la vitesse d'élimination d'un produit à l'intérieur d'une enceinte fermée,
- la figure 11 est une représentation schématique d'un dispositif de traitement non conforme pour la mise en oeuvre du procédé de l'invention ; et
- la figure 12 est une représentation schématique d'un vaporiseur adapté pour évaporer des débits de liquide élevés.

L'invention porte donc sur un procédé de traitement par au moins un produit, qui est soit un traitement de désinfection soit un traitement phytosanitaire.

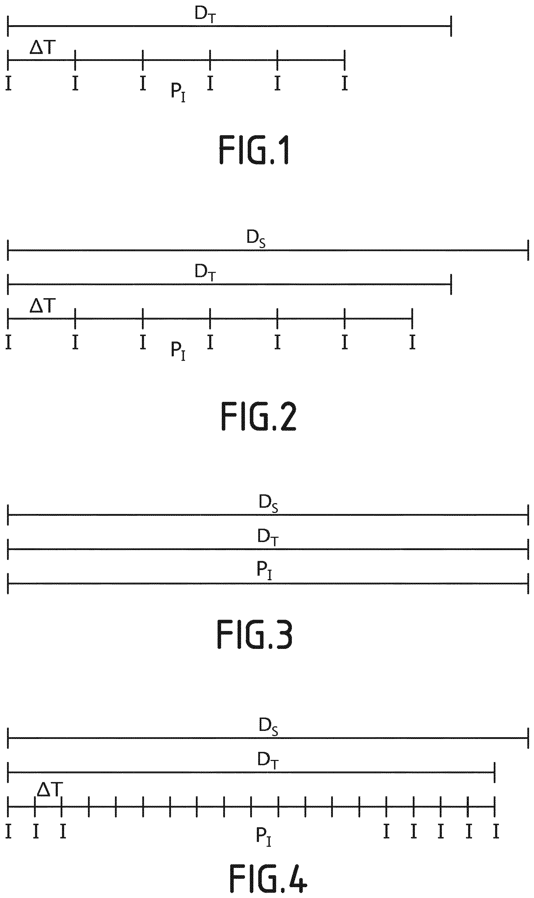

Dans tous les cas, comme illustré sur la figure 1, le procédé comprend une étape de traitement de durée DT supérieure ou égale à 3 jours, de préférence supérieure ou égale à 5 jours, encore de préférence supérieure ou égale à 7 jours.

La durée de l'étape de traitement dépend du type de traitement.

Premier type de traitement, à durée courte

Pour un traitement de désinfection de locaux ou pour un traitement phytosanitaire du blé en silos, d'agrumes, de fruits à noyaux tels que des pêches, la durée DT de l'étape de traitement est typiquement comprise entre 3 jours et 1 mois. Elle est fonction du cas d'application : nature de la contamination à éliminer et niveau de contamination résiduelle visé, nature du produit biocide ou phytosanitaire à appliquer, taille de l'enceinte fermée, température à l'intérieur de l'enceinte fermée, du etc.

Deuxième type de traitement, à durée longue

Les traitements à durée longue sont typiquement des traitements phytosanitaires. La durée de traitement DT est fonction de la durée de stockage DS des produits végétaux à l'intérieur de l'enceinte fermée (figures 2 à 4). L'invention est particulièrement adaptée à des cas où les produits végétaux sont stockés pendant une longue durée. La durée de stockage DS est typiquement comprise entre 3 mois et 1 an.

La durée de traitement DT est typiquement supérieure ou égale à 50% de la durée de stockage, de préférence supérieure à 75%, encore de préférence supérieure à 90% de la durée de stockage DS.

La durée de traitement DT est ainsi typiquement comprise entre 3 mois et 1 an.

Ainsi, on réalise un traitement qui s'étend pratiquement sur toute la durée de stockage, garantissant un excellent contrôle de l'évolution des produits végétaux.

L'étape de traitement, comme visible sur la figure 1, comprend au moins une phase d'injection d'une durée PI supérieure ou égale à 3 jours, de préférence supérieure ou égale à 5 jours, encore de préférence supérieure ou égale à 7 jours. Au cours de la phase d'injection, un liquide contenant le ou chaque produit est évaporé et injecté à l'intérieur d'une enceinte fermée.

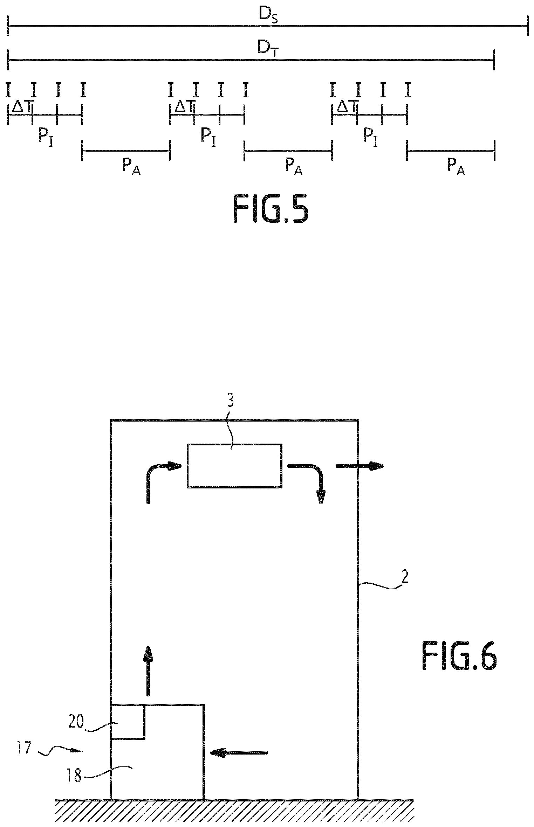

L'étape de traitement comporte selon un exemple non conforme à l'invention, une seule phase d'injection, comme illustré sur les figures 1 à 4. Selon l'invention, l'étape de traitement comporte une pluralité de phases d'injection séparées les unes des autres par des phases d'arrêt sans injection de liquide, comme illustré sur la figure 5.

La durée de la phase d'injection est au minimum égale à 3 jours, de préférence supérieure ou égale à 5 jours, encore de préférence supérieure ou égale à 7 jours. Elle est au maximum égale à la durée DT de l'étape de traitement.

Dans le cas d'une phase d'injection unique (figures 1 à 4, non conformes à l'invention), la durée de la phase d'injection est sensiblement égale à la durée de l'étape de traitement DT. En variante, la durée de la phase d'injection est plus courte que celle de l'étape de traitement, par exemple du fait que la dernière opération d'injection a été effectuée légèrement avant la fin de l'étape de traitement.

Quand l'étape de traitement comprend une pluralité de phases d'injection successives (figure 5, selon l'invention), la durée de chaque phase d'injection est typiquement comprise entre 3 jours et 15 jours, de préférence entre 3 jours et 10 jours.

La durée de chaque phase d'arrêt est typiquement comprise entre 15 jours et deux mois. Par exemple, elle est choisie pour que la durée cumulée de la phase d'injection et de la phase d'arrêt suivante soit d'un mois.

Comme illustré sur la figure 1, pendant la phase d'injection, le liquide est évaporé et injecté avec une période ΔT inférieure à 2 jours. On entend par là que les opérations d'injection I de liquide évaporé sont séparées par une période ΔT de 2 jours maximum.

L'évaporation et l'injection du liquide est par exemple continue pendant toute la phase d'injection, la période étant dans ce cas égale à 0 (figure 3).

En variante, l'évaporation et l'injection du liquide est fractionnée, la phase d'injection comportant alors plusieurs opérations d'injection I de liquide évaporé séparées (figures 1, 2 4, 5) espacées les unes des autres par la période ΔT. La période ΔT est la durée séparant le début de deux opérations d'injection de liquide évaporé. L'évaporation et l'injection sont interrompues entre deux opérations d'injection. Ces opérations d'injection sont symbolisées par un I sur les figures 1, 2, 4 et 5.

Le nombre d'opérations injection I pendant la phase d'injection est au minimum de 2. Typiquement, on réalise entre deux opérations d'injection par jour et une opération tous les deux jours. Par exemple, on réalise une opération d'injection par jour.

La durée de chaque opération d'injection est au minimum d'une heure et au maximum de vingt-quatre heures. Typiquement, elle est comprise entre 1 heure et 15 heures.

Typiquement, les opérations d'injection sont régulièrement espacées dans le temps.

On entend ici par enceinte fermée une enceinte présentant un niveau relativement élevé d'étanchéité, de telle sorte que l'atmosphère interne de l'enceinte ne communique ou communique peu avec l'atmosphère à l'extérieur de l'enceinte. Comme expliqué plus bas, il est important que le produit ou les produits injectés dans l'enceinte ne s'échappent pas dans l'atmosphère externe, ou s'échappent à un débit réduit, suffisamment faible pour ne pas pénaliser la consommation de liquide et de produits .

Dans le cas d'un traitement de désinfection (figure 6), l'enceinte fermée est par exemple une partie d'un hôpital, d'une école, d'une installation industrielle, ou tout autre type de local. L'enceinte fermée peut encore être une cuve, une citerne de stockage ou de transport, ou n'importe quel autre type d'enceinte fermée à désinfecter. L'enceinte fermée peut encore être un local destiné au stockage de produits végétaux, mais ne contenant pas de produits végétaux.

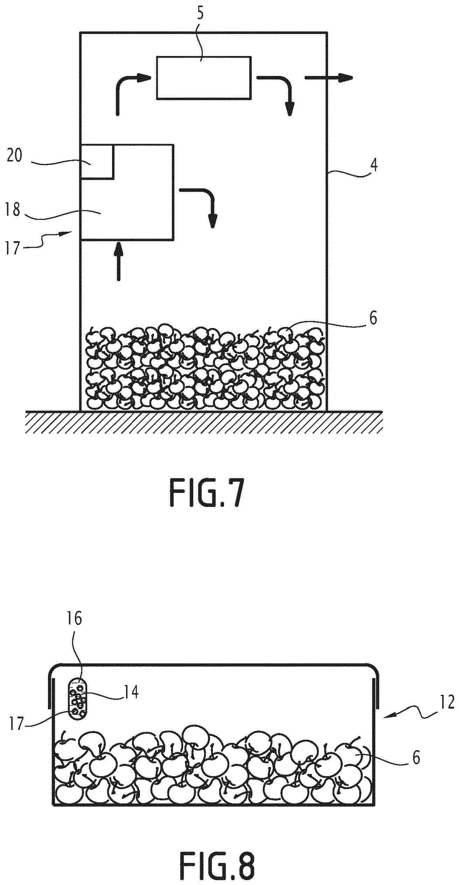

Dans le cas d'un traitement phytosanitaire, l'enceinte fermée est par exemple une chambre, un silo, une serre ou tout local destiné au stockage de produits végétaux tels que des fruits ou des légumes (figure 7). Le traitement est appliqué pendant que les produits végétaux sont stockés dans l'enceinte fermée, ou au contraire pendant que l'enceinte fermée est vide.

Selon une variante non couverte par l'invention, l'enceinte fermée est un emballage dans lequel sont conditionnés des produits végétaux (figure 8).

Le liquide comprend un seul produit, ou comprend plusieurs produits en mélange. Le produit est un produit volatile. Sa température d'ébullition est comprise entre 60 et 280°C.

Chaque produit est soit un produit biocide, pour des applications de désinfection, soit un produit phytosanitaire, pour le traitement des produits végétaux.

Le liquide ne contient que des produits biocides, ou que des produits phytosanitaires, ou encore comprend un ou plusieurs produits biocides mélangés à un ou plusieurs produits phytosanitaires.

Au moins un des produits phytosanitaire est choisi dans la liste suivante : huile essentielle, terpènes, alcool de C3 à C9 saturé ou insaturé, comme par exemple l'isopropanol, l'iso-octanol, le 2-éthylhexanol, les produits de synthèse volatiles, comme par exemple le glutaraldéhyde, l'hexanal, le diméthylnaphtalène et le 3-décène-2-one.

L'huile essentielle est par exemple choisie dans le groupe formé par l'huile de menthe, l'huile de girofle, l'huile de rose, l'huile de thym, l'huile d'origan. En variante, le liquide comprend l'un des constituants de ces huiles, choisi dans l'ensemble formé par le L-carvone, l'eugénol, le géraniol, le thymol, le carvacrol.

Pour une application de désinfection, le produit biocide est un produit volatil, naturel ou de synthèse, ayant des propriétés biocides, tel que l'huile de girofle, l'huile de thym, le geraniol, l'alcool ethylique, le glutaraldéhyde.

Typiquement, le liquide comprend seulement le ou les produits, sans solvant ni adjuvant. En variante, le liquide comporte un solvant aqueux ou organique, dans lequel est dissout le ou les produits et un ou plusieurs adjuvants. Le solvant aqueux est par exemple de l'eau. Le solvant organique est par exemple un solvant du type décrit dans FR 2 791 910 ou des glycols, di-glycols et leurs esters relatifs. Les adjuvants sont par exemple des substances aptes à véhiculer la ou les matières actives ou aptes à donner un effet de dilution.

En tout état de cause, le liquide au cours de la phase d'injection est vaporisé à une température inférieure à 50°C, de préférence inférieure à 20°C, notamment comprise entre -2°C et +12°C, et en particulier entre 0 et 10°C. Par exemple, le liquide est évaporé à température ambiante.

Selon un aspect important de l'invention, au cours de chaque phase d'injection Pl, le liquide est évaporé et injecté dans des conditions choisies de manière à maintenir une concentration du ou de chaque produit dans une atmosphère interne de l'enceinte fermée comprise dans une fourchette de concentration prédéterminée.

La fourchette de concentration est fonction de l'application envisagée et du produit. Elle est généralement déterminée expérimentalement, comme décrit plus bas. Par exemple, on vise un gradient total entre 50 et 2000 ppm de concentration dans l'atmosphère.

On entend ici par conditions d'évaporation et d'injection, un ou plusieurs des paramètres suivants :
- durée de la phase de traitement,
- nombre de phases d'injection ;
- durée de chaque phase d'injection ;
- durée de chaque phase d'arrêt sans injection ;
- nombre d'opérations d'injection pendant chaque phase d'injection ;
- durée de la période séparant deux opérations d'injection,
- quantité de produit injecté à chaque opération d'injection.

De manière avantageuse, en vue de déterminer les conditions d'évaporation et d'injection du liquide, le procédé comprend une étape de détermination d'une grandeur représentative d'une vitesse d'élimination du ou de chaque produit à l'intérieur de l'enceinte fermée, et une étape de sélection de conditions d'évaporation et d'injection du liquide en fonction de la grandeur représentative déterminée.

En effet, le produit injecté à l'intérieur de l'enceinte est consommé de différentes manières :
- une partie est absorbée par les produits végétaux, dans le cas d'un traitement phytosanitaire ;
- une partie est déposée sur les surfaces internes de l'enceinte fermée ;
- une partie est évacuée vers l'extérieure de l'enceinte fermée, dans le cas où il existe des fuites provoquant une circulation d'air depuis l'intérieur de l'enceinte fermée vers l'extérieur de l'enceinte fermée ;
- une partie absorbée dans le système de traitement d'air de l'enceinte fermée, quand celle-ci est équipée d'un tel système.

En effet, les systèmes de traitement d'air peuvent comporter des filtres à charbon actif qui piègent une partie du produit de l'atmosphère interne. De même, les enceintes fermées, notamment les chambres de stockage des produits végétaux, sont typiquement réfrigérées. Il se produit une condensation au niveau des échangeurs de chaleur permettant de refroidir l'atmosphère interne de l'enceinte fermée, le produit venant en partie se dissoudre dans l'humidité condensée.

Il est à noter que la vitesse à laquelle chaque produit est absorbé par les produits végétaux dépend de la température ambiante à l'intérieur de l'enceinte fermée.

L'étape de détermination permet de déterminer la grandeur représentative de la vitesse d'élimination du ou de chaque produit compte tenu de tous les paramètres ci-dessus.

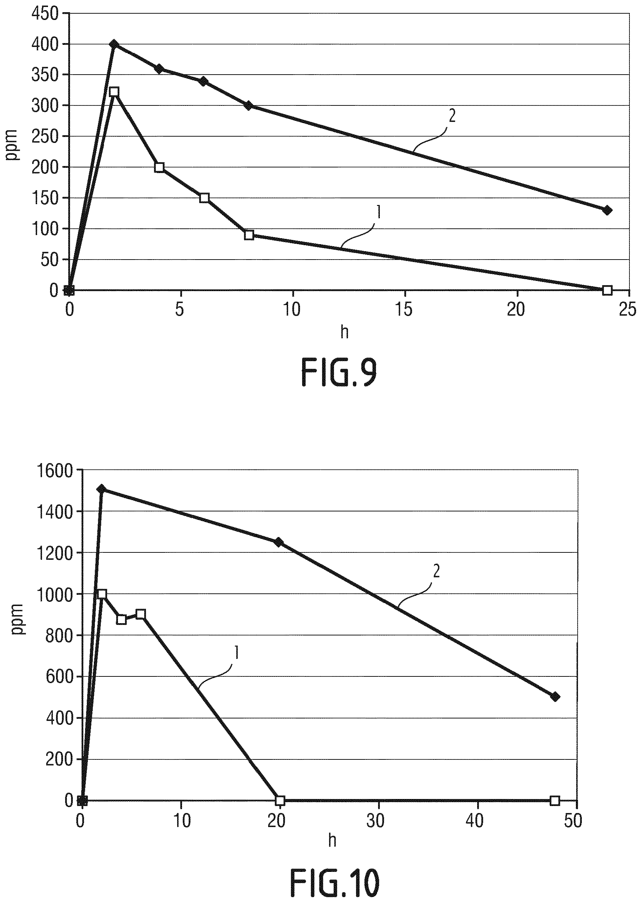

Typiquement, cette étape est réalisée de manière expérimentale, en faisant des mesures du type représenté sur les figures 9 et 10.

Dans l'exemple représenté sur la figure 9, une quantité d'un alcool pur est évaporée et injectée dans une enceinte fermée, qui est ici un dessiccateur. Le dessiccateur présente un volume de 9 litres, et est maintenu à une température de 7°C. La quantité d'alcool injectée est de 0,01 ml. La courbe 1 correspond à un premier essai, dans lequel le dessiccateur contient 1 kg de produit végétal. Sur cette figure, le temps exprimé en heure est en abscisse, et la concentration en alcool gazeux, exprimée en ppm, est en ordonnée.

La courbe 2 correspond à un essai où le dessiccateur est vide, et ne contient pas de produit végétal. Il est fait dans les mêmes conditions que l'essai correspondant à la courbe 1.

La courbe 1 montre qu'à l'issue de la phase d'évaporation, la concentration en alcool gazeux est légèrement supérieure à 300 ppm. La phase d'évaporation dure environ deux heures. Puis, au cours d'une seconde phase, la concentration en alcool gazeux diminue rapidement et passe à environ 100 ppm au bout de huit heures. Dans une troisième phase, la concentration en alcool gazeux diminue plus lentement. Après quinze heures, la quantité d'alcool gazeux est inférieure à 50 ppm. Ainsi, pendant la seconde phase, la vitesse d'élimination de l'alcool est de l'ordre 35 ppm/h.

La courbe 2 montre une concentration en alcool gazeux d'environ 400 ppm à l'issue de la phase d'évaporation. La concentration en alcool gazeux diminue ensuite de manière régulière, avec une pente plus faible que pour la première courbe. La pente est alors d'environ 12 ppm/h.

L'écart entre ces deux courbes permet de déterminer notamment la quantité d'alcool absorbée par les produits végétaux en fonction du temps.

Pendant la deuxième phase de la courbe 1, cette vitesse est de l'ordre de 23 ppm/h.

La figure 10 illustre des essais similaires à ceux représentés sur la figure 9. La seule différence est que la quantité d'alcool injectée pour les essais représentés sur la figure 10 est dix fois supérieure à la quantité d'alcool injectée pour les essais représentés sur la figure 9. On injecte, pour les essais de la figure 10, 0,1 ml d'alcool pur.

Les courbes de la figure 10 ont sensiblement la même forme que les courbes de la figure 9. Sur la courbe 1, correspondant au cas où le dessiccateur comprend 1 kg de produits végétaux, au cours de la seconde phase, la vitesse d'élimination de l'alcool gazeux est d'environ 50 ppm par heure. La vitesse d'élimination de l'alcool gazeux pour la courbe 2, correspondant au cas où le dessiccateur est vide, est d'environ 22 ppm/h. Ainsi, pendant la seconde phase, les produits végétaux absorbent environ 28 ppm d'alcool gazeux par heure.

A l'étape de sélection, on utilise les résultats ci-dessus pour choisir les conditions d'évaporation et d'injection du liquide. Ces conditions sont celles listées plus haut.

Par exemple, ces conditions peuvent être choisies pour maintenir la concentration d'alcool dans l'atmosphère interne de l'enceinte fermée dans une fourchette déterminée. Dans l'exemple illustré sur les figures 9 et 10, la fourchette pourrait être 100 ppm-1000 ppm. Les conditions choisies seraient d'effectuer toutes les 18 heures une injection de 0,1 ml d'alcool dans le dessiccateur, ou effectuer toutes les 8 heures une injection de 0,01 ml d'alcool dans le dessicateur.

En variante, les conditions d'évaporation et d'injection peuvent être choisies pour maintenir la vitesse d'absorption du ou de chaque produit dans les produits végétaux dans une fourchette prédéterminée.

Ceci peut être effectué en déterminant d'abord une grandeur représentative de la vitesse d'absorption du ou de chaque produit dans les produits végétaux, puis en choisissant les conditions d'évaporation et d'injection en fonction de la grandeur représentative ainsi déterminée.

Dans les exemples représentés sur les figures 9 et 10, il est possible de maintenir une vitesse d'absorption dans les produits végétaux entre 20 et 30 ppm/h en réalisant une injection de 0,01 ml d'alcool tous les 8 heures, ou avec une injection de 0.1 ml d'alcool toutes les 18 heures.

Plusieurs exemples de réalisation du procédé de traitement vont maintenant être décrits.

Selon un mode de réalisation, le procédé de traitement est un procédé de désinfection. Le produit est un produit biocide, choisi comme indiqué ci-dessus.

Comme illustré sur la figure 6, dans ce mode de réalisation, le liquide est vaporisé et injecté à l'intérieur d'une enceinte fermée 2, qui est un local appartenant par exemple à une école, un hôpital ou un bâtiment industriel. L'enceinte fermée 2 est par exemple équipée d'un système de traitement d'air 3, tel qu'un système de chauffage/climatisation permettant de maintenir la température du volume interne de l'enceinte fermée 2 dans une fourchette de température déterminée.

Dans ce cas, l'étape de traitement est d'une durée typiquement comprise entre 3 jours et 1 mois, de préférence entre 3 jours et 10 jours.

Dans un exemple de réalisation non conforme à l'invention, la durée de traitement est d'une semaine, avec une opération d'évaporation et d'injection par jour. La dose journalière injectée est de 0,5ml/m³ d'huile de menthe ou d'huile de girofle.

Selon un second mode de réalisation illustré sur la figure 7, le procédé de traitement est un procédé de traitement phytosanitaire. Il est dans ce cas destiné à déposer sur des produits végétaux un produit qui est un produit phytosanitaire.

Le produit phytosanitaire est choisi comme indiqué ci-dessus.

L'enceinte fermée est un local, par exemple une chambre ou un silo ou un local 4 de stockage de produits végétaux.

L'enceinte fermée 4 comporte un système de traitement d'air 5, visant à maintenir la température du volume interne de l'enceinte fermée 4 dans une fourchette prédéterminée. Typiquement, cette température est comprise entre 0°C et 10°C.

Les produits végétaux 6 sont typiquement des fruits ou des légumes.

Par exemple, les produits végétaux sont des fruits tels que des pommes, des poires, du raisin, des grenades etc.

Selon un autre exemple, les produits végétaux sont des légumes tels que des pommes de terre, ou des brocolis par exemple.

Les produits végétaux 6 sont en contact direct avec l'air remplissant l'enceinte fermée 4. Le liquide vaporisé est injecté directement dans le volume interne de l'enceinte fermée 4.

Le procédé comprend donc une étape de stockage de produits végétaux dans l'enceinte fermée 4, pendant une durée de stockage DS comprise entre 3 jours et un an. L'étape de traitement est concomitante à l'étape de stockage, comme illustré sur les figures 2 à 5.

La durée de stockage DS et la durée de traitement DT sont comme décrit ci-dessus.

Selon une première variante de réalisation non conforme à l'invention, la durée de stockage DS est courte, comprise entre 3 jours et 1 mois. Ce cas correspond au traitement phytosanitaire du blé en silos, d'agrumes, de fruits à noyaux tels que des pêches. La durée DT de l'étape de traitement est typiquement comprise entre 3 jours et 1 mois. Le procédé comporte une unique phase d'injection de durée comprise entre 3 jours et 1 mois, typiquement avec une injection par jour.

Selon une seconde variante de réalisation, la durée de stockage DS est longue, typiquement comprise entre 3 mois et 1 an. Ce cas correspond au traitement phytosanitaire des pommes de terre pour le stockage de long terme, par exemple. La durée de traitement DT est sensiblement égale à la durée de stockage DS.

Selon une première approche non conforme à l'invention, le procédé comporte une seule phase d'injection de durée PI sensiblement égale à la durée de traitement, typiquement avec une injection par jour.

Selon une seconde approche, le procédé comporte plusieurs phases d'injection séparées par des phases d'arrêt sans injection (comme illustré sur la figure 5).

Les durées PI et PA respectives des phases d'injection et d'arrêt sont par exemple :
- 3 jours d'injection avec une injection par jour, suivis de 27 jours sans injection ;
- 7 jours d'injection avec une injection par jour, suivis de 23 jours sans injection ;
- 10 jours d'injection avec une injection par jour, suivis de 20 jours sans injection.

Le nombre de jours d'injection est déterminé en fonction de la quantité totale de produit à injecter, ainsi que du nombre de jours de contact et de la dose seuil pour avoir l'activité recherchée.

Par exemple, pour l'injection de 1 litre de 2-éthylhexanol sur des pommes de terres stockées 6 mois, il est possible :
- d'injecter chaque jour 5,5 ml/tonne de pommes de terre (exemple non conforme à l'invention);
- d'injecter 3 jours par mois 55 ml/tonne ;
- d'injecter 7 jours par mois 24 ml/tonne.

La solution préférée correspond à l'injection de faibles doses journalières.

Selon un premier exemple de réalisation non conforme à l'invention, des pommes de terre sont stockées dans l'enceinte fermée 4, à une température d'environ 7°C à 9°C.

A l'étape de traitement, un liquide comprenant au moins 50% en masse de L-carvone est évaporé et injecté dans l'enceinte fermée 4. Typiquement, ce liquide est de l'huile de spearmint. Dans ce cas, la durée de traitement est sensiblement égale à la durée de stockage. L'étape de traitement comporte une seule phase d'injection, de durée sensiblement égale à la durée de traitement. Une opération d'injection est effectuée chaque jour, la quantité de liquide injectée étant comprise entre 1 et 10 ml de liquide par tonne de pommes de terre, de préférence comprise entre 1 et 5 ml par tonne de pommes de terre, et valant par exemple 2 ml par tonne de pommes de terre.

Selon un second exemple de réalisation non conforme à l'invention, des pommes de terre sont stockées dans l'enceinte fermée 4, à une température d'environ 7°C à 9°C.

A l'étape de traitement, un liquide comprenant un alcool C3-C9 est évaporé et injecté dans l'enceinte fermée 4. Typiquement, ce liquide est du 2-éthylhexanol. Dans ce cas, la durée de traitement est d'environ 6 mois. L'étape de traitement comporte une seule phase d'injection, de durée sensiblement égale à la durée de traitement. Une opération d'injection est effectuée chaque jour, la quantité totale de de liquide injectée au cours des 6 mois étant comprise entre 100 et 2000 ml de liquide par tonne de pommes de terre, de préférence comprise entre 600 et 1200 ml par tonne de pommes de terre, et valant par exemple 1000 ml par tonne de pommes de terre.

Selon un troisième exemple de réalisation, des pommes de terre sont stockées dans l'enceinte fermée 4, à une température d'environ 7°C à 9°C.

A l'étape de traitement, un liquide comprenant un alcool C3-C9 est évaporé et injecté dans l'enceinte fermée 4. Typiquement, ce liquide est du 2-ethylhexanol. Dans ce cas, la durée de traitement est d'environ 6 mois. L'étape de traitement comporte plusieurs phases d'injection, séparées par des phases d'arrêt sans injection. Chaque phase d'injection dure entre 3 jours et deux semaines, typiquement une semaine. La durée de chaque phase d'arrêt est d'environ 3 semaines. Pendant chaque phase d'injection, une opération d'injection est effectuée chaque jour, la quantité de liquide injectée étant comprise entre 5,5 et 110 ml/jour ml de liquide par tonne de pommes de terre, de préférence comprise entre 33 et 67 ml/jour par tonne de pommes de terre, et valant par exemple 55 ml/jour par tonne de pommes de terre.

Selon un quatrième exemple de réalisation non conforme à l'invention, des agrumes reçoivent un traitement fongicide par de l'huile de girofle, pour une protection pendant la phase de maturation au cours de laquelle se produit le changement de couleur du fruit à température et humidité relativement élevée. Cette phase intervient juste avant l'emballage des fruits. Le traitement comporte une phase d'injection de 4 g/tonne par jour, pendant 5 jours. La durée de stockage est courte, de 3 jours à 1 mois.

Un troisième mode de réalisation non couvert par l'invention va maintenant être décrit, en référence à la figure 8.

Seuls les points par lesquels ce troisième mode de réalisation diffère du second mode de réalisation seront détaillés ci-dessous. Les éléments identiques ou assurant les mêmes fonctions dans les deux modes de réalisation seront désignés par les mêmes références.

Dans ce troisième mode de réalisation, l'enceinte fermée est un emballage 12, et non un silo ou une chambre froide. Cet emballage est par exemple un sac, ou une boîte, ou encore une caisse comme représentée sur la figure 8.

Le liquide 14 contenant le ou chaque produit est placé dans un contenant fermé 16, pourvu d'au moins une paroi en un matériau perméable au ou à un des produits. Le contenant 16 est placé dans l'emballage 12.

Avantageusement, un matériau solide poreux 17 comme de la pierre ponce est disposé dans le contenant 16, le liquide imbibant le matériau solide.

Le contenant 16 est par exemple un sachet ou une boîte.

Dans ce troisième mode de réalisation, le liquide est évaporé et se diffuse à l'intérieur de l'emballage 12 de manière continue. L'injection est réalisée à travers le matériau perméable. Le liquide s'évapore à l'intérieur du contenant, le liquide évaporé diffusant à travers la paroi en matériau perméable.

On entend ici par perméable au ou à un des produits le fait que la paroi soit perméable au ou à chaque produit, typiquement perméable à la vapeur de liquide.

Dans l'exemple représenté sur la figure 8, l'emballage contient des produits végétaux 6. Le produit est alors un produit phytosanitaire.

En variante, le liquide est un produit biocide, le but étant de maintenir l'intérieur de l'emballage dans un état sanitaire satisfaisant.

La quantité de produit injectée est contrôlée en choisissant de manière appropriée, en fonction de la nature du liquide et du produit, le matériau constituant la paroi perméable du contenant fermé 16, sa superficie, son épaisseur et le volume de liquide renfermé dans le contenant 16. Par exemple, le matériau de la paroi perméable est du polyéthylène, le produit phytoprotecteur est de l'huile de menthe et le produit végétal à traiter la pomme de terre.

Des pommes de terre de la variété Nicolas récoltées le 12/05/2015 sont stockées dans des cellules de stockage expérimentales de 200 litres contenant chacune 15kg de pommes de terre.

Des sachets en polyéthylène contenant 4g d'huile de menthe absorbée sur du sable hydrophobe sont préparés.

Pour évaluer l'efficacité de cette méthode de traitement antigerminatif plusieurs cellules sont préparées :
1)-Une cellule témoin contenant que des pommes de terre
2)-Une cellule contenant 1 sachet.
3)-Une cellule contenant 2 sachets.
4)-Une cellule contenant 4 sachets.
5)-Une cellule contenant 6 sachets.

Après 20 jours de conservation à température ambiante, 30°C le jour et 20°C la nuit. Les pommes de terre de chaque cellule sont observées :
% des germes observés après 20 jours de conservation :
1) 100%
2) 80%
3) 3-4%
4) 0%
5) 0%

Un dispositif de traitement 17 va maintenant être décrit. Ce dispositif est prévu pour la mise en oeuvre du procédé décrit ci-dessus.

Inversement, le procédé décrit ci-dessus est prévu pour être mis en oeuvre par le dispositif de traitement qui va maintenant être décrit.

Le dispositif de traitement 17 comprend :
- un vaporiseur 18 configuré pour évaporer un liquide contenant le ou chaque produit à une température inférieure à 50°C, et pour injecter le liquide évaporé à l'intérieur d'une enceinte fermée, l'enceinte fermée étant un local ;
- un dispositif électronique 20 de pilotage du vaporiseur.

Comme indiqué plus haut, pour des applications de désinfection, l'enceinte fermée est par exemple une salle faisant partie d'un hôpital, d'une école, d'une installation industrielle, ou de tout autre bâtiment. L'enceinte fermée peut encore être une cuve, une citerne de stockage ou de transport, ou n'importe quel autre type d'enceinte fermée à désinfecter.

Pour les applications phytosanitaires, l'enceinte fermée est une chambre froide, un silo de stockage de produits végétaux, ou tout autre type d'enceinte adaptée destinée au stockage de produits végétaux tels que des fruits ou des légumes.

Le produit est du type décrit plus haut relativement au procédé de traitement.

Selon un mode de réalisation non couvert par l'invention, le vaporiseur 18 est typiquement un vaporiseur du type décrit dans WO 2014/001201. Ce vaporiseur est particulièrement adapté pour l'évaporation à température ambiante de liquides relativement lourds, tels que des huiles essentielles.

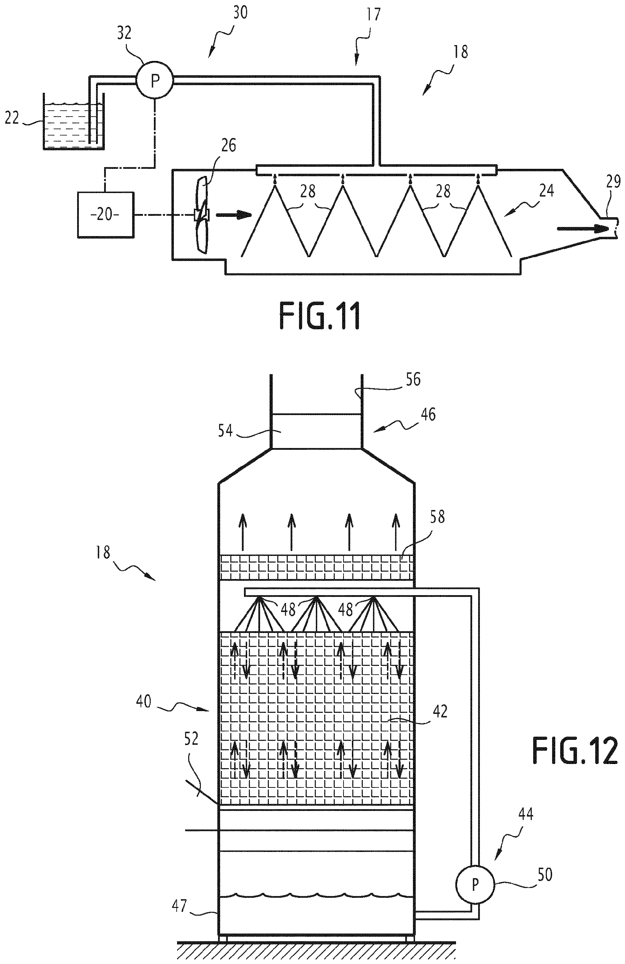

Le vaporiseur 18 comprend typiquement, comme illustré sur la figure 11,
- une réserve 22 contenant le liquide ;
- un organe 24 d'absorption du liquide ;
- un organe 26 de production d'un flux de gaz, le flux de gaz étant dirigé vers l'organe d'absorption 24.

L'organe d'absorption 24 comprend une pluralité de bandes absorbantes 28, propres à retenir le liquide. Les bandes absorbantes sont par exemple disposées verticalement, ou sont inclinées par rapport à la verticale avec une inclinaison permettant au liquide de s'écouler par gravité depuis l'extrémité supérieure de la bande vers l'extrémité inférieure. Les bandes sont par exemple disposées en V, la pointe du V pointant vers le haut. Elles peuvent être agencées en W ou en accordéon.

Les bandes absorbantes 28 sont typiquement en microfibres.

L'organe 26 de production d'un flux de gaz est par exemple un ventilateur, orienté de manière à créer un courant d'air vers les bandes absorbantes 28.

Le courant d'air chargé en liquide vaporisé est canalisé par un conduit 29 débouchant dans l'atmosphère interne de l'enceinte fermée. En variante, l'organe d'absorption de liquide 24 et l'organe de production d'un flux de gaz 26 sont placés directement à l'intérieur de l'enceinte fermée, l'organe 26 mettant en mouvement l'atmosphère interne de l'enceinte fermée (figures 6 et 7).

De manière avantageuse, le vaporiseur 18 comprend un organe 30 d'injection du liquide dans l'organe d'absorption 24 à partir de la réserve 22. Cet organe d'injection 30 comporte un organe doseur 32, par exemple une pompe doseuse. Cet organe doseur 32 permet de contrôler le débit de liquide injecté dans les bandes absorbantes 28. Le liquide est injecté à l'extrémité supérieure de chaque bande, et s'écoule par gravité jusqu'à l'extrémité inférieure de chaque bande.

De préférence, le vaporiseur 18 est configuré de telle sorte que tout le liquide injecté soit évaporé avant d'atteindre l'extrémité inférieure de chaque bande 28, de manière à maîtriser de manière parfaite le débit de liquide évaporé. Ce résultat est obtenu en choisissant de manière adéquate, en fonction de la nature du liquide, la superficie des bandes, le débit de liquide injecté dans chaque bande, et le débit de gaz.

Un tel vaporiseur est vendu par la société XEDA INTERNATIONAL sous le nom XEDAVAP^{®}.

Selon une variante non couverte par l'invention, le vaporiseur est différent. Le vaporiseur comporte par exemple une cuve contenant le liquide, et un organe de production d'un flux de gaz dirigé vers la surface libre du liquide.

Selon une variante non couverte par l'invention, le vaporiseur comprend une cuve contenant le liquide et un dispositif permettant de buller du gaz à travers le liquide. Le gaz après avoir traversé le liquide et s'être chargé en vapeur est mélangé à un autre flux de gaz qui l'entraîne vers l'intérieur de l'enceinte fermée.

Le dispositif électronique 20 est par exemple un calculateur ou une partie de calculateur. En variante, le dispositif électronique de pilotage 20 est réalisé sous forme de composants logiques programmables (FPGA, Field Programmable Gate Array) ou sous forme d'un circuit intégré dédié (ASIC, Application Spécifie Integrated Circuit).

Le dispositif électronique de pilotage 20 est programmé pour mettre en oeuvre le procédé de l'invention décrit plus haut.

Ainsi, il est programmé pour mettre en oeuvre une étape de traitement de durée supérieure ou égale à 3 jours, cette étape de traitement comprenant au moins une phase d'injection d'une durée supérieure ou égale à 3 jours au cours de laquelle le vaporiseur évapore le liquide et injecte le liquide vaporisé avec une période inférieure ou égale à 2 jours.

La durée de l'étape de traitement est de préférence supérieure ou égale à 5 jours, encore de préférence supérieure ou égale à 7 jours.

La durée de la ou chaque phase d'injection est de préférence supérieure ou égale à 5 jours, encore de préférence supérieure ou égale à 7 jours.

Pour les applications de désinfection, la durée de traitement est comme décrit plus haut.

Pour les applications phytosanitaires, la durée de traitement DT est fonction de la durée de stockage DS des produits végétaux à l'intérieur de l'enceinte fermée. L'invention est particulièrement adaptée à des cas où les produits végétaux sont stockés pendant une durée de stockage comprise entre 3 jours et 1 an,

En termes de durée de stockage il y a deux cas différents :
Cas de durée de stockage courte : de 3 jours à 1 mois, pour par exemple le blé stocké dans des silos avant la mise en sac, les fruits à noyaux (pêches, nectarines..), les oranges stockées en chambre de maturation avant leur emballage. Dans ce cas le traitement durera au moins 3 jours.

Cas de durée de stockage longue : de 3 mois à 1 an, avec une durée de traitement comprise elle aussi entre 3 mois et 1 an. Le dispositif électronique est alors programmé pour que la durée de traitement soit supérieure ou égale à 50% de la durée de stockage, de préférence supérieure à 75%, encore de préférence supérieure à 90% de la durée de stockage.

Ainsi, on réalise un traitement qui s'étend pratiquement sur toute la durée de stockage, garantissant un excellent contrôle de l'évolution des produits végétaux.

Selon un premier mode de réalisation non couvert par l'invention, correspond aux figures 1 à 4, le dispositif électronique 30 est programmé pour que l'étape de traitement comporte une seule phase d'injection. La durée de la phase d'injection est sensiblement égale à la durée de l'étape de traitement. En variante, la durée de la phase d'injection est plus courte que celle de l'étape de traitement, par exemple du fait que la dernière opération d'injection a été effectuée légèrement avant la fin de l'étape de traitement.

Selon un second mode de réalisation selon l'invention, le dispositif électronique est programmé pour que l'étape de traitement comprenne une pluralité de phase d'injection successive, séparée les unes des autres par des phases d'arrêt sans injection (figure 5).

La durée de chaque phase d'injection et de chaque phase d'arrêt est comme décrit plus haut relativement au procédé de traitement.

Par ailleurs, selon une première variante de réalisation, le dispositif électronique est programmé pour que pendant chaque phase d'injection, on réalise plusieurs opérations d'évaporation et d'injection de liquide, typiquement avec un intervalle régulier, c'est-à-dire avec une période régulière entre les injections. Ceci est représenté sur les figures 1, 2, 4 et 5. La période séparant deux injections est, comme indiqué plus haut, inférieure à 2 jours, et vaut par exemple une journée. En d'autres termes, on réalise par exemple une opération d'injection de liquide par jour.

Selon une autre variante de réalisation, le dispositif électronique est programmé pour évaporer et injecter le liquide en continu, c'est-à-dire sans aucune interruption pendant toute la phase d'injection.

Le dispositif électronique 20 est programmé pour que, au cours de la ou chaque phase d'injection, le liquide soit évaporé et injecté dans des conditions choisies de manière à maintenir une concentration du ou de chaque produit dans l'atmosphère interne de l'enceinte fermée comprise dans une fourchette de concentration prédéterminée.

La fourchette de concentration est déterminée en utilisant des courbes telles que celles représentées aux figures 9 et 10, comme décrit plus haut relativement au procédé de l'invention.

Les conditions d'évaporation et d'injection comportent typiquement un ou plusieurs des paramètres suivants :
- nombre de phases d'injection ;
- durée de chaque phase d'injection ;
- nombre d'opérations d'injection dans chaque phase d'injection ;
- période entre deux opérations d'injections,
- quantité de produits injectée à chaque opération d'injection ;
- durée de la période d'arrêt entre deux périodes d'injection ;
- etc.

En variante, le dispositif électronique 20 est programmé pour que, au cours de la ou chaque phase d'injection, le liquide soit évaporé et injecté dans des conditions choisies de manière à maintenir la vitesse d'absorption du produit phytosanitaire par les produits végétaux dans une fourchette prédéterminée.

Cette fourchette est déterminée par exemple en utilisant des courbes similaires à celle des figures 9 et 10, comme décrit ci-dessus.

Les conditions comportent les mêmes paramètres que ceux décrits plus haut.

Selon l'invention et comme illustré sur la figure 12, le vaporiseur 18 comprend une tour 40 comportant un garnissage 42, un dispositif 44 d'injection du liquide au-dessus du garnissage 42, et un dispositif 46 agencé pour créer un flux d'air ascendant à travers le garnissage 42.

La tour 40 comprend typiquement un bac 47, placé sous le garnissage 42, et contenant le liquide.

Le dispositif 44 d'injection du liquide au-dessus du garnissage comprend typiquement une ou plusieurs rampes d'aspersion 48 placées au-dessus du garnissage 42, et un organe de transfert du liquide 50, tel qu'une pompe, aspirant le liquide dans le bac 47 et le refoulant dans la ou les rampes 48.

Le dispositif 46 permettant de créer le flux d'air, comporte une ou plusieurs entrées d'air 52 débouchant à l'intérieur de la tour, sous le garnissage 42, et une organe de circulation d'air 54, placé au-dessus du garnissage. L'organe 54 est par exemple un ventilateur ou une soufflante.

Chaque entrée 52 communique fluidiquement avec l'atmosphère interne de l'enceinte fermée 4.

La tour 40 présente une sortie 56 pour l'air chargé en liquide évaporé, placée en partie supérieure, au-dessus des garnissages 42. La sortie 56 est raccordée fluidiquement avec l'atmosphère interne de l'enceinte fermée 4. L'organe 54 aspire l'air chargé en liquide évaporé au-dessus du garnissage 42 et le refoule dans ou vers la sortie 56.

Le garnissage 42 est par exemple un garnissage en nid d'abeille.

Le vaporiseur comporte en outre un séparateur de gouttes 58, placé au-dessus des rampes d'aspersion 48.

Dans un exemple de réalisation, la tour 40 est d'axe vertical, et présente une section horizontale sensiblement constante de 700x700mm. Le bac 47 présente la même section horizontale que la tour, et présente une hauteur comprise entre 500 et 700mm.

Le vaporiseur présente par exemple quatre entrées 52, chacune disposée sur un des côtés de la tour.

Le garnissage 42 présente une hauteur d'environ 1 mètre.

Le garnissage 42 est placé par exemple 700mm au-dessous de l'arrivée de liquide, le séparateur de gouttes 58 étant placé 300mm au-dessus de l'arrivée de liquide.

Le fonctionnement du vaporiseur 18 est le suivant.

Le liquide 46 à évaporer est disposé dans le bac 47. La pompe 50 refoule le liquide dans la ou les rampes 48, qui projettent le liquide vers le garnissage 42. L'organe 54 de mise en circulation de l'air crée un flux d'air ascendant. L'air pénètre dans la tour 40 par les entrées 52, circule vers le haut à travers le garnissage 42. Le liquide circule quant à lui vers le bas à travers le garnissage 42, une partie du liquide étant évaporée au contact du flux d'air et étant entraînée par le flux d'air sous forme de vapeur. La fraction du liquide qui n'est pas évaporée retombe dans le bac 47 et est recyclée. L'air chargé en liquide évaporé passe à travers le séparateur de gouttes 58 et est refoulé par l'organe 54 vers la sortie 56.

Le vaporiseur 18 est typiquement placé à l'intérieur de l'enceinte fermée 4. Il aspire par la ou les entrées 52 directement l'atmosphère interne, et rejette l'air chargé en vapeur directement dans l'atmosphère interne, par la sortie 56.

Un procédé utilisant un tel vaporiseur, c'est-à-dire dans lequel le liquide est évaporé par mise en contact avec un flux d'air dans une tour à garnissage, permet d'évaporer une quantité importante de liquide, nettement supérieure à celle qu'il est possible d'évaporer dans un vaporiseur du type XEDAVAP^{®}.

Par exemple, dans le vaporiseur illustré sur la figure 11, avec des bandes absorbantes ayant une surface de 4m², il est possible d'évaporer environ 1,2 litres par jour d'huile de menthe. Avec la tour à garnissage de la figure 12, il est possible d'évaporer une quantité très supérieure à 1,2 litres par jour jusqu'à 20 litres par jour.

Ce vaporiseur présente l'avantage d'être extrêmement simple, d'avoir une capacité d'évaporation très élevée, et d'avoir un encombrement relativement modeste.

Du fait de sa grande capacité d'évaporation, il est possible de maintenir l'atmosphère interne de l'enceinte fermée à une concentration en produit proche de la saturation. Ceci permet au produit d'exercer au mieux son action.

Le vaporiseur est susceptible d'être piloté par le dispositif électronique 20 de différentes façons.

Selon une première variante, le vaporiseur fonctionne en permanence. Il est placé dans l'atmosphère interne de l'enceinte fermée. Il aspire celle-ci et rejette l'air chargé en vapeur. Une fois l'atmosphère interne saturée en produit, il n'est plus possible d'augmenter la concentration de vapeur, et l'évaporation est stoppée naturellement.

En variante, le dispositif électronique 20 est programmé pour démarrer et arrêter l'évaporateur en fonction d'un diagramme de temps prédéterminé.

Suivant encore une autre variante, le dispositif électronique 20 est raccordé à un analyseur mesurant en permanence la concentration de la vapeur de produit dans l'atmosphère interne de l'enceinte fermée. Il démarre, arrête ou module le fonctionnement du vaporiseur 18 de manière à maintenir la concentration dans une fourchette prédéterminée.

Suivant encore une autre variante de réalisation, le dispositif de traitement comprend une caméra agencée de manière à observer les produits végétaux stockés dans l'enceinte fermée. La caméra est raccordée à un poste de contrôle situé à distance de l'enceinte fermée. Ce poste de contrôle comporte un écran permettant à un opérateur de voir les images prises par la caméra, et ainsi de connaître l'état des produits végétaux stockés. Par ailleurs, le poste de contrôle est configuré pour contrôler le dispositif électronique de pilotage 20, ce qui permet à l'opérateur d'adapter le pilotage du vaporiseur, typiquement pour modifier la dose de produit appliquée aux produits végétaux par unité de temps.

Selon un autre aspect, l'invention porte sur un ensemble comprenant l'enceinte fermée 2, 4 et un dispositif 17 de traitement ayant les caractéristiques ci-dessus. Dans ce cas, le vaporiseur 18 est configuré pour injecter les vapeurs du liquide dans l'enceinte fermée 2, 4.

Selon une variante de réalisation, l'ensemble comporte des produits végétaux stockés dans l'enceinte fermée 4.

Les produits végétaux 6 sont typiquement exposés à l'atmosphère interne de l'enceinte fermée 4, comme illustré sur la figure 7, au sens où ils ne sont pas emballés dans un contenant.

Selon encore un autre aspect non couvert par l'invention, l'ensemble comprend :
- un emballage fermé 12 tel qu'un sac ou une boîte ;
- des produits végétaux 6 stockés dans l'emballage 12 ;
- un liquide 14 contenant au moins un produit phytosanitaire ;
- un contenant 16 fermé pourvu d'au moins une paroi en un matériau perméable au ou à un des produits phytosanitaire, le liquide 14 étant enfermé dans le contenant 16.

Ce mode de réalisation est illustré sur la figure 8.

Le contenant 16 étant placé dans l'emballage 12.

Le liquide 14 et le contenant 16 sont choisis pour que, à une température inférieure à 50°C, le liquide contenant le ou chaque produit phytosanitaire soit vaporisé et injecté à l'intérieur de l'emballage 12 de manière continue pendant une phase d'injection d'une durée supérieure à six jours.

Le liquide imbibe des solides poreux 17, disposés dans le contenant 16.

Le contenant 16 est du type décrit plus haut en référence au procédé de traitement.

Le liquide 14 est un des liquides décrit plus haut. De préférence, le liquide est un liquide facile à évaporer à basse température, par exemple un alcool.

Pour obtenir les performances recherchées, on choisit typiquement, en fonction de la nature du liquide et du produit phytosanitaire, la superficie de la paroi en matériau perméable, l'épaisseur de cette paroi, la nature du matériau.

Par exemple, le matériau est du polyéthylène.

## Revendications

1. Procédé de traitement par au moins un produit biocide et/ou phytoprotecteur volatile, de température d'ébullition comprise entre 60 et 280°C, le procédé comprenant une étape de traitement de durée (DT) supérieure ou égale à 3 jours, l'étape de traitement comprenant au moins une phase d'injection (PI) au cours de laquelle un liquide contenant le ou chaque produit est évaporé et injecté à l'intérieur d'une enceinte fermée (2, 4), l'enceinte fermée (2, 4) étant un local, le liquide étant évaporé et injecté avec une période (ΔT) inférieure ou égale à deux jours pendant la phase d'injection, le liquide étant évaporé à une température inférieure à 50°C ;
l'étape de traitement comprenant une pluralité de phases d'injections successives séparées les unes des autres par des phases d'arrêt sans injection de liquide, **caractérisé en ce que** la durée de chaque phase d'injection est comprise entre 3 jours et 15 jours ;
le liquide étant évaporé par mise en contact avec un flux d'air dans une tour à garnissage d'un vaporiseur (18), le vaporiseur (18) comprenant une tour (40) comportant un garnissage (42), un dispositif (44) d'injection du liquide au-dessus du garnissage (42), et un dispositif (46) agencé pour créer un flux d'air ascendant à travers le garnissage (42).

2. Procédé selon la revendication 1, **caractérisé en ce que** le procédé comprend une étape de détermination d'une grandeur représentative d'une vitesse d'élimination du ou de chaque produit à l'intérieur de l'enceinte fermée (2, 4, 12), et une étape de sélection de conditions d'évaporation et d'injection du liquide en fonction de la grandeur représentative déterminée.

3. Procédé selon la revendication 1 ou 2, **caractérisé en ce que**, au cours de la ou chaque phase d'injection, le liquide est évaporé et injecté dans des conditions choisies de manière à maintenir une concentration du ou de chaque produit dans une atmosphère interne de l'enceinte fermée (2, 4, 12) comprise dans une fourchette de concentration prédéterminée pour chaque utilisation, cette concentration étant comprise entre 50 et 2000 ppm .

4. Procédé selon l'une quelconque des revendications 1 à 3, **caractérisé en ce qu'**au moins un des produits est choisi dans la liste de produits phytosanitaires ou dans la liste de produits biocides suivantes :
- produits phytosanitaires : huile essentielle ; terpènes ; alcool à chaîne courte de C3 à C9 saturé ou insaturé, comme par exemple l'isopropanol, l'iso-octanol, le 2-éthylhexanol ; produits de synthèse volatiles, comme par exemple le glutaraldéhyde, l'hexanal, le diméthylnaphtalène et le 3-décène-2-one ;
- produits biocides : l'huile de girofle, huile de thym, geraniol, alcool ethylique, glutaraldéhyde.

5. Procédé selon l'une quelconque des revendications précédentes, **caractérisé en ce que** le procédé comprend une étape de stockage de produits végétaux (6) dans l'enceinte fermée (4, 12) pendant une durée de stockage (DS) supérieure ou égale à 3 jours, au moins un des produits étant un produit phytosanitaire, la durée de traitement (DT) étant de préférence supérieure ou égale à 50% de la durée de stockage (DS).

6. Procédé selon la revendication 3, **caractérisé en ce qu'**un analyseur mesure en permanence la concentration de produit dans l'atmosphère interne de l'enceinte fermée (2, 4), l'évaporation étant effectuée par un vaporiseur (18) piloté en fonction de la concentration mesurée pour maintenir la concentration de produit dans une fourchette prédéterminée.

7. Dispositif de traitement par au moins un produit biocide et/ou phytoprotecteur volatile, de température d'ébullition comprise entre 60 et 280°C, le dispositif (17) comprenant :
- un vaporiseur (18) configuré pour évaporer un liquide contenant le ou chaque produit à une température inférieure à 50°C, et pour injecter le liquide vaporisé à l'intérieur d'une enceinte fermée (2, 4);
- un dispositif électronique (20) de pilotage du vaporiseur (18), programmé pour mettre en oeuvre une étape de traitement de durée (DT) supérieure ou égale à 3 jours, l'étape de traitement comprenant au moins une phase d'injection au cours de laquelle le vaporiseur (18) évapore le liquide et injecte le liquide vaporisé avec une période inférieure à deux jours,
le dispositif électronique (20) est programmé pour que l'étape de traitement comprenne une pluralité de phases d'injections successives séparées les unes des autres par des phases d'arrêt sans injection,
**caractérisé en ce que** la durée de chaque phase d'injection est comprise entre 3 jours et 15 jours ;
le vaporiseur (18) comprenant une tour (40) comportant un garnissage (42), un dispositif (44) d'injection du liquide au-dessus du garnissage (42), et un dispositif (46) agencé pour créer un flux d'air ascendant à travers le garnissage (42).

8. Dispositif selon la revendication 7, **caractérisé en ce que** le dispositif électronique (20) est programmé pour que, au cours de la ou chaque phase d'injection, le liquide soit évaporé et injecté dans des conditions choisies de manière à maintenir une concentration du ou de chaque produit dans une atmosphère interne de l'enceinte fermée (2, 4) comprise dans une fourchette de concentration prédéterminée pour chaque utilisation, comprise entre 50 et 2000 ppm de concentration dans l'atmosphère.

9. Dispositif selon la revendication 7 ou 8, **caractérisé en ce que** des produits végétaux (6) sont stockés dans l'enceinte fermée (4) pendant une durée de stockage (DS) supérieure ou égale à 3 jours, au moins un des produits étant un produit phytosanitaire, le dispositif électronique (20) étant programmé pour que la durée de traitement (DT) soit supérieure ou égale à 50% de la durée de stockage (DS).

10. Dispositif selon la revendication 8, **caractérisé en ce qu'**il comprend un analyseur mesurant en permanence la concentration de vapeur de produit dans l'atmosphère interne de l'enceinte fermée (2, 4), le dispositif électronique de pilotage (20) pilotant le vaporiseur (18) en fonction de la concentration mesurée pour maintenir la concentration de produit dans une fourchette prédéterminée.

11. Ensemble comprenant une enceinte fermée (2, 4) et un dispositif de traitement (17) selon l'une quelconque des revendications 7 à 10, le vaporiseur (18) étant configuré pour injecter le liquide vaporisé dans l'enceinte fermée (2, 4), des produits végétaux (6) étant de préférence stockés dans l'enceinte fermée (4).

## Patentansprüche

1. Verfahren zur Behandlung mit mindestens einem flüchtigen Biozid und/oder Pflanzenschutzmittel mit einer Siedetemperatur zwischen 60 und 280 °C, wobei das Verfahren einen Behandlungsschritt mit einer Dauer (DT) von 3 Tagen oder mehr umfasst, wobei der Behandlungsschritt mindestens eine Einleitungsphase (PI) umfasst, während der eine Flüssigkeit, die das oder jedes Produkt enthält, verdampft und in das Innere eines geschlossenen Behälters (2, 4) eingeleitet wird, wobei der geschlossene Behälter (2, 4) ein Raum ist, wobei die Flüssigkeit mit einer Periode (ΔT) von weniger als oder gleich zwei Tagen während der Einleitungsphase verdampft wird, wobei die Flüssigkeit bei einer Temperatur von unter 50 °C verdampft wird;
wobei der Behandlungsschritt eine Vielzahl von aufeinanderfolgenden Einleitungsphasen umfasst, die voneinander durch Stopp-Phasen ohne Flüssigkeitseinleitung getrennt sind, **dadurch gekennzeichnet, dass** die Dauer jeder Einleitungsphase zwischen 3 Tagen und 15 Tagen liegt;
wobei die Flüssigkeit durch Inkontaktversetzen mit einem Luftstrom in einem mit einem Verdampfer (18) gefüllten Turm verdampft wird, wobei der Verdampfer (18) einen Turm (40) umfasst, der eine Füllung (42), eine Vorrichtung (44) zum Einleiten der Flüssigkeit über der Füllung (42) und eine Vorrichtung (46) umfasst, die eingerichtet ist, um einen nach oben gerichteten Luftstrom durch die Füllung (42) zu erzeugen.

2. Verfahren nach Anspruch 1, **dadurch gekennzeichnet, dass** das Verfahren einen Schritt des Bestimmens einer repräsentative Größe für eine Geschwindigkeit des Entfernens des oder jedes Produkt im Inneren des geschlossenen Behälters (2, 4, 12) und einen Schritt des Auswählens von Bedingungen für die Verdampfung und Einleitung der Flüssigkeit in Abhängigkeit von der bestimmten repräsentativen Größe umfasst.

3. Verfahren nach Anspruch 1 oder 2, **dadurch gekennzeichnet, dass** während der oder jeder Einleitungsphase die Flüssigkeit verdampft und unter Bedingungen eingeleitet wird, die derart gewählt sind, dass eine Konzentration des oder jedes Produkts in einer inneren Atmosphäre des geschlossenen Behälters (2, 4, 12) aufrechterhalten wird, die in einem für jede Verwendung vorbestimmten Konzentrationsbereich liegt, wobei diese Konzentration zwischen 50 und 2000 ppm liegt.

4. Verfahren nach einem der Ansprüche 1 bis 3, **dadurch gekennzeichnet, dass** mindestens eins der Produkte aus der folgenden Liste von Pflanzenschutzmitteln oder der folgenden Liste von Bioziden ausgewählt wird:
- Pflanzenschutzmittel: ätherisches Öl; Terpene; kurzkettiger C3-C9-Alkohol, gesättigt oder ungesättigt, z. B. Isopropanol, Iso-Octanol, 2-Ethylhexanol; flüchtige Syntheseprodukte wie z. B. Glutaraldehyd, Hexanal, Dimethylnaphthalin und 3-Decen-2-on;
- Biozide: Nelkenöl, Thymianöl, Geraniol, Ethylalkohol, Glutaraldehyd.

5. Verfahren nach einem der vorhergehenden Ansprüche, **dadurch gekennzeichnet, dass** das Verfahren einen Schritt des Lagerns von Pflanzenprodukten (6) in dem geschlossenen Behälter (4, 12) für eine Lagerdauer (DS) von über oder gleich 3 Tagen umfasst, wobei mindestens eins der Produkte ein Pflanzenschutzmittel ist, wobei die Behandlungsdauer (DT) vorzugsweise über oder gleich 50 % der Lagerdauer (DS) beträgt.

6. Verfahren nach Anspruch 3, **dadurch gekennzeichnet, dass** ein Analysator ständig die Produktkonzentration in der inneren Atmosphäre des geschlossenen Behälters (2, 4) misst, wobei die Verdampfung durch einen Verdampfer (18) erfolgt, der in Abhängigkeit von der gemessenen Konzentration gesteuert wird, um die Produktkonzentration in einem vorgegebenen Bereich zu halten.

7. Vorrichtung zur Behandlung mit mindestens einem flüchtigen Biozid und/oder Pflanzenschutzmittel mit einer Siedetemperatur zwischen 60 und 280 °C, wobei die Vorrichtung (17) umfasst:
- einen Verdampfer (18), der ausgelegt ist, um eine Flüssigkeit, die das oder jedes Produkt enthält, bei einer Temperatur unter 50 °C zu verdampfen und um die verdampfte Flüssigkeit in das Innere eines geschlossenen Behälters (2, 4) einzuleiten;
- eine elektronische Vorrichtung (20) zur Steuerung des Verdampfers (18), die programmiert ist, um einen Behandlungsschritt mit einer Dauer (DT) von über oder gleich 3 Tagen durchzuführen, wobei der Behandlungsschritt mindestens eine Einleitungsphase umfasst, während der der Verdampfer (18) die Flüssigkeit verdampft und die verdampfte Flüssigkeit mit einer Periode von weniger als zwei Tagen einleitet,
wobei die elektronische Vorrichtung (20) so programmiert ist, dass der Verarbeitungsschritt eine Vielzahl von aufeinanderfolgenden Einleitungsphasen umfasst, die voneinander durch Stopp-Phasen ohne Einleitung getrennt sind,
**dadurch gekennzeichnet, dass** die Dauer jeder Einleitungsphase zwischen 3 Tagen und 15 Tagen liegt;
wobei der Verdampfer (18) einen Turm (40) umfasst, der eine Füllung (42), eine Vorrichtung (44) zum Einleiten der Flüssigkeit über der Füllung (42) und eine Vorrichtung (46) umfasst, die eingerichtet ist, um einen nach oben gerichteten Luftstrom durch die Füllung (42) zu erzeugen.

8. Vorrichtung nach Anspruch 7, **dadurch gekennzeichnet, dass** die elektronische Vorrichtung (20) programmiert ist, damit während der oder jeder Einleitungsphase die Flüssigkeit unter Bedingungen verdampft und eingeleitet wird, die derart gewählt sind, dass eine Konzentration des oder jedes Produkts in einer inneren Atmosphäre des geschlossenen Behälters (2, 4) aufrechterhalten wird, die in einem für jede Verwendung vorbestimmten Konzentrationsbereich liegt, der zwischen 50 und 2000 ppm Konzentration in der Atmosphäre liegt.

9. Vorrichtung nach Anspruch 7 oder 8, **dadurch gekennzeichnet, dass** pflanzliche Produkte (6) in dem geschlossenen Behälter (4) für eine Lagerdauer (DS) von über oder gleich 3 Tagen gelagert werden, wobei mindestens eins der Produkte ein Pflanzenschutzmittel ist, wobei die elektronische Vorrichtung (20) programmiert ist, damit die Behandlungsdauer (DT) über oder gleich 50 % der Lagerdauer (DS) beträgt.

10. Vorrichtung nach Anspruch 8, **dadurch gekennzeichnet, dass** sie einen Analysator umfasst, der ständig die Produktkonzentration in der inneren Atmosphäre des geschlossenen Behälters (2, 4) misst, wobei die elektronische Steuervorrichtung (20) den Verdampfer (18) in Abhängigkeit von der gemessenen Konzentration steuert, um die Produktkonzentration in einem vorgegebenen Bereich zu halten.

11. Anordnung, umfassend einen geschlossenen Behälter (2, 4) und eine Behandlungsvorrichtung (17) nach einem der Ansprüche 7 bis 10, wobei der Verdampfer (18) ausgelegt ist, um die verdampfte Flüssigkeit in den geschlossenen Behälter (2, 4) einzuleiten, wobei pflanzliche Produkte (6) vorzugsweise in dem geschlossenen Behälter (4) gelagert werden.

## Claims

1. Method of treatment with at least one biocidal and/or safener product with a boiling temperature between 60 and 280°C, wherein the method comprises a treatment step of a duration (DT) greater than or equal to 3 days, wherein the treatment step comprises at least one injection phase (PI) of a duration greater than or equal to 3 days during which a liquid containing the, or each, product is evaporated and injected inside an enclosure (2, 4), wherein the enclosure (2, 4) is a room, while the liquid is evaporated and injected with a period (ΔT) of less than or equal to two days during the injection phase, wherein the liquid is evaporated at a temperature below 50°C;
the treatment step comprising a plurality of successive injection phases separated from each other by stop phases without liquid injection,
**characterized in that** the duration of each injection phase is typically between 3 days and 15 days;
the liquid being evaporated by contact with a flow of air in a packed tower of a vaporizer (18), the vaporizer (18) comprising a tower (40) having a packing (42), a device (44) for injecting the liquid above the packing (42), and a device (46) that is arranged to create an upward flow of air through the packing (42).

2. Method according to claim 1, **characterized in that** the method comprises a step of determining a representative quantity of a rate of elimination of the, or each, product inside the enclosure (2, 4, 12), and a step of selecting evaporation and liquid injection conditions according to the determined representative quantity.

3. Method according to claim 1 or 2, **characterized in that**, during the, or each, injection phase, the liquid is evaporated and injected under conditions chosen in order to maintain a concentration of the, or each, product in an internal atmosphere of the enclosure (2, 4, 12) within a concentration range predetermined for each use, wherein this concentration is between 50 and 2000 ppm.

4. Method according to any one of the claims 1 to 3, **characterized in that** at least one of the products is chosen from the following list of safener products or from the following list of biocidal products:
- safener products: essential oil; terpenes; saturated or unsaturated C3-C9 short chain alcohol, such as isopropanol, iso-octanol, 2-ethylhexanol; volatile synthetic products, such as, for example, glutaraldehyde, hexanal, dimethylnaphthalene and 3-decene-2-one;
- biocidal products: clove oil, thyme oil, geraniol, ethyl alcohol, glutaraldehyde.

5. Method according to any one of the preceding claims, **characterized in that** the method comprises a step of storing vegetable products (6) in the enclosure (4, 12) for a storage period (DS) longer or equal to 3 days, wherein at least one of the products is a safener product, the treatment duration (DT) being preferably greater than or equal to 50% of the storage duration (DS).

6. Method according to claim 3, **characterized in that** an analyzer permanently measures the product concentration in the internal atmosphere of the enclosure (2, 4), wherein the evaporation is carried out by a vaporizer (18) controlled according to the measured concentration in order to maintain the product concentration within a predetermined range.

7. Treatment device with at least one biocidal and/or safener product with a boiling temperature between 60 and 280°C, wherein the device (17) comprises:
- a vaporizer (18) designed to evaporate a liquid containing the, or each, product at a temperature below 50°C, and to inject the vaporized liquid into an enclosure (2, 4);
- an electronic device (20) for controlling the vaporizer (18), programmed to implement a treatment step of a duration (DT) greater than or equal to 3 days, wherein the treatment step comprises at least one injection phase of a duration greater than or equal to 3 days during which the vaporizer (18) evaporates the liquid and injects the vaporized liquid with a period of less than two days,
the electronic device (20) is programmed so that the processing step comprises a plurality of successive injection phases separated from each other by stop phases without injection, **characterized in that** the duration of each injection phase is typically between 3 days and 15 days;
the vaporizer (18) comprising a tower (40) having a packing (42), a device (44) for injecting the liquid above the packing (42), and a device (46) that is arranged to create an upward flow of air through the packing (42).

8. Device according to claim 7, **characterized in that** the electronic device (20) is programmed so that, during the, or each, injection phase, the liquid is evaporated and injected in conditions chosen to maintain a concentration of the, or each, product in an internal atmosphere of the enclosure (2, 4) within a concentration range predetermined for each use, the concentration in the atmosphere being comprised between 50 and 2000 ppm.

9. Device according to claim 7 or 8, **characterized in that** vegetable products (6) are stored in the enclosure (4) for a storage period (DS) greater than or equal to 3 days, wherein at least one of the products is a safener product, wherein the electronic device (20) is programmed so that the treatment duration (DT) is greater than or equal to 50% of the storage duration (DS).

10. Device according to claim 8, **characterized in that** it comprises an analyzer continuously measuring the product vapor concentration in the internal atmosphere of the enclosure (2, 4), wherein the electronic control device (20) controls the vaporizer (18) as a function of the measured concentration in order to maintain the product concentration within a predetermined range.

11. Unit comprising an enclosure (2, 4) and a treatment device (17) according to any one of the claims 7 to 10, wherein the vaporizer (18) is designed to inject the vaporized liquid into the enclosure (2, 4), wherein vegetable products (6) are preferably stored in the enclosure (4).
